# EUROPÄISCHE PATENTSCHRIFT

(11) **EP 1 692 239 B1**
(45) Veröffentlichungstag und Bekanntmachung des Hinweises auf die Patenterteilung: **21.11.2007**
(21) Anmeldenummer: 04804654.4
(22) Anmeldetag: 02.12.2004
(51) Int. Cl.: C09J 123/20

(54) **HOCHTACKIGE KLEBMASSE, VERFAHREN ZU DEREN HERSTELLUNG UND DEREN VERWENDUNG**
HIGHLY-TACKY ADHESIVE SUBSTANCE, PRODUCTION METHOD AND USE THEREOF
SUBSTANCE ADHESIVE TRES COLLANTE, PROCEDE DE PRODUCTION ET UTILISATION DE LADITE SUBSTANCE

(30) Priorität: 05.12.2003 DE 10357321
(43) Veröffentlichungstag der Anmeldung: 23.08.2006
(73) Patentinhaber: tesa AG, 20253 Hamburg (DE)
(72) Erfinder: KRAWINKEL, Thorsten, 22457 Hamburg (DE); GÖTZ, Kerstin, 22547 Hamburg (DE); RING, Christian, 20259 Hamburg (DE)
(74) Vertreter: Heins, Matthias
(86) Internationale Anmeldenummer: PCT/EP2004/053231
(87) Internationale Veröffentlichungsnummer: WO 2005/054392

(56) Entgegenhaltungen:
- US-A- 5 747 132
- US-A- 5 882 775
- US-B1- 6 482 281

## Beschreibung

Die vorliegende Erfindung betrifft laut den Ansprüchen 1 bis 6 ein mit Klebmasse beschichtetes Klebeband und laut Anspruch 7 eine Verwendung eines solchen Klebebandes, nämlich für den an sich bekannten Rollenwechsel von auf Rollen aufgewickeltem Flachbahnmaterial, insbesondere beschichtetem Flachbahnmaterial, wie zum Beispiel gestrichene Papiere, PE-beschichtete Papiere oder Folien, verwendbar ist.

Viele der genannten Kunststoffoberflächen oder der zur besonderen Glanzerzielung veredelten Papieroberflächen, wie sie zum Beispiel für hochwertige Druckereierzeugnisse benötigt werden, haben besonders glatte und wenig saugfähige Oberflächen, sodass Verklebungen auf ihnen unzuverlässig sein können, insbesondere dann, wenn sie mit einer nur sehr kurzen Anpresszeit bei begrenztem Anpressdruck hergestellt werden. Gerade diese ungünstigen Randbedingungen herrschen aber bei den von Zeit zu Zeit erforderlichen fliegenden Spliceverbindungen vor, wo die Anpresszeit - die Maschinen werden ja nicht angehalten, sondern laufen mit voller Geschwindigkeit weiter und dies können in der Papierherstellung bis zu 130 km/h (also etwa 36 Meter pro Sekundel) sein - nur in Bruchteilen einer Millisekunde zu messen ist und wo der Anpressdruck nicht allzu hoch sein kann, weil sonst der Rollwiderstand an den Anpressrollen zu groß wäre und Papierabrisse provozieren könnte.

Für die letztgenannte sehr anspruchsvolle Verwendung sind schon eine Vielzahl von Klebebändern mit den unterschiedlichsten Klebmassen angeboten worden, wobei in der Regel eine genaue Abstimmung der Klebmasse auf das zu klebende Gut und insbesondere dessen Oberflächenmaterial und Oberflächenraulgkeit empfohlen wird. Ganz generell lässt sich aber sagen, dass Klebmassen für eine Eignung zum fliegenden Splice (engl.: flying splice) von Kunststoff-Folien und beschichteten oder gestrichenen Papieren über eine hohe Anfasskiebrigkeit verfügen müssen, um bei den vorherrschenden Geschwindigkeiten mit der ablaurfenden Bahn ausreichend sicher zu verkleben.

Neben den vorgenannten hier besonders im Fokus stehenden Anwendungen in der Papier herstellenden und der Papier verarbeitenden Industrie sowie in der Folien herstellenden Industrie gibt es aber auch andere Anwendungen für Klebmassen hoher Anfassklebrigkeit (Tackigkeit; engl.: tackiness) so zum Beispiel beim Verschluss einiger Massenverpackungen. Die flying splice Technik ist für die heutige Klebeindustrie etwa das, was vor 40 Jahren die Raumfahrt für den Maschinenbau war, darum erscheint es gerecht, den Schutz für die hier offenbarten Klebmassen nicht allein auf die flying Splice Anwendung zu begrenzen.

Auch für einen statisch (also im Stillstand) ausgeführten Splice ist die Verklebung besonders glatter Papiere, insbesondere wenn diese beschichtet sind, schwierig. Zwar kann dort die Anpresszeit deutlich länger sein, in vielen Fällen hilft aber selbst dieses erfahrungsgemäß nicht weiter.

Üblicherweise werden sowohl für fliegende als auch für statische Splice Klebmassen auf Acrylatbasis verwendet Diese haben jedoch de n Nachteil, dass sie auf Materialien mit besonders glatter Oberfläche wie zum Beispiel PE-beschichteten Papieren oder Tiefdruckpapieren nicht oder in nicht ausreichendem Maß ankleben und es zu einem Versagen des Splices kommt

Um mit bekannten Klebebändern trotzdem eine ausreichende Verklebung zu ermöglichen, ist es als gedanklich simpelste, wirtschaftlich aber oft schmerzhafteste Maßnahme bekannt, die Verklebungsfläche vergrößern. Eine weitere Möglichkeit besteht darin, statt Klebebändern Flüssigkleber einzusetzen. Bei dessen Verwendung müssen aber hohe Personalkosten durch eine lang dauernde manuelle Verarbeitung und Lösungsmitteldämpfe mit all ihren negativen Auswirkungen auf die Umwelt im Allgemeinen und das eigene Personal im Besonderen hingenommen werden.

Der Erfindung liegt die **Aufgabe** zugrunde, ein Klebeband mit einer hochtackigen Klebmasse zu schaffen. Vorzugsweise sollte sie dennoch eine so große Scherstandzeit erbringen, dass sie auch zur Herstellung von Splice-Klebebändem geeignet ist, die mit Flüssigklebern - insbesondere auch auf beschichteten Materialien- zu konkurrieren vermögen, ohne auf extreme Klebebandbreiten gehen zu müssen.

Ausgehend von der an sich bekannten Kenntnis, dass bei Entwicklung von Klebmassen die Forderung nach Tackigkeit mit der Forderung nach hoher Kohäsion konkurriert, weshalb zwischen beiden konkurrierenden Forderungen der Klebefachmann für die jeweilige Anwendung den erträglichsten Kompromiss sucht, ferner ausgehend von der Kenntnis, dass hohe Tackigkeit eher durch geringe Molekulargewichte, hohe Kohäsion hingegen durch hohe Molekulargewichte erzielt wird, gelangten die Erfinder zu der Erkenntnis, dass eine Fortsetzung der bislang üblichen Suche nach einer solchen Molekulargewichtsverteilung, deren Häufungspunkt (= absolutem Maximum) zwischen der für hohe Tackigkeit günstigsten Lage einerseits und der für hohe Kohäsion günstigsten Lage andererseits läge, nicht recht weiterführt. So kamen die Erfinder zu der Idee, eine solche Klebmasse vorzuschlagen, die zwei deutlich voneinander getrennte relative Maxima in der Molekulargewichtsverteilung des klebenden Polymers aufweisen sollte.
Ferner haben die Erfinder erkannt, dass die bislang bescheidenen Klebeergebnisse mit der Oberflächenspannung acrylatbasierender Klebstoffe zu tun haben könnten und der Übergang auf andere, die problematischen Oberflächen besser benetzende Polymere vorteilhaft sein könnte.

Die Erfinder haben ferner erkannt, dass Polyisobutylen gegenüber den bisher vorherrschenden Acrylatklebern bessere Benetzungseigenschaften bieten kann. Bislang aber schieden Klebmassen auf Polyisobutylenbasis für die genannten besonders anspruchsvollen Anwendungen immer deshalb aus, weil sie entweder keinen ausreichend hohen Tack oder keine ausreichend lange Standzeit im Scherversuch zeigten. Die Erfinder setzten sich aber über letztgenannten Ausschlussgrund hinweg in ihrer - inzwischen bestätigten - Zuversicht, den Zwang zum bislang "faulen" Kompromiss zwischen Tack und Kohäsivität hinreichend deutlich zu entspannen durch ihre neuartige Lehre, anstelle eines mittleren Maximums lieber zwei deutlich voneinander beabstandete relative Maxima in der Molekulargewichtsverteilung des klebenden Polymers zu erzeugen.

Nach all diesen Überlegungen gelangten die Erfinder schließlich zur erfindungsgemäßen Lehre eines Klebebandes 1 and den Ansprüchen 1 bis 6 mit einer Klebmasse, die zumindest Polyisobutylen und
zumindest klebrigmachendes Harz enthalten soll und dadurch gekennzeichnet ist, dass
die Molekulargewichtsverteilung - also die diagrammartige Darstellung der Häufigkeit über dem Molekulargewicht - des Polyisobutylens zwei relative Maxima aufweist,
und zwar eines zwischen 50.000 und 200.000 und
ein zweites zwischen 1,0 x 10⁶ und 3,5 x 10⁶.

Alle Angaben zum Molekulargewicht und zur Molekulargewichtsverteilung in dieser Schrift beziehen sich auf das gewichtsmittlere Molekulargewicht M_{w} [Einheit jeweils g/mol; auch wenn nicht gesondert angegeben] bzw. auf dessen Verteilung.
Die Messung des Molekulargewichtes erfolgt bevorzugt über GPC (Gelpermeationschromatografie) wie folgt :

Es wird eine Lösung der Probe in Tetrahydrofuran mit einer Konzentration von 3g/l hergestellt. Nach dem Lösen über 12 Stunden bei Raumtemperatur wird die Lösung durch einen 1 µm Einmalfilter filtriert. Es werden ca. 200 ppm Toluol als interner Standard zugesetzt. Mittels eines Autosamplers werden 20µl der Lösung auf eine Säule der folgenden Konfiguration gegeben. Nach einer 10³Å Säule von 50 mm Länge folgen eine 10⁶Å, eine 10⁴Å und eine 10³Å Säule mit jeweils einer Länge von 300mm. Als Eluent dient Tetrahydrofuran, das mit einer Flussrate von 1,0ml/min gepumpt wird. Die Kalibrierung der Säulen erfolgt mit Polystyrolstandards, die Detektion erfolgt über die Messung der Änderung des Brechungsindex mit Hilfe eines Shodex Differentialrefraktometers RI 71.

Erfindungsgemäß verwendete Klebmassen weisen deutlich höhere Kohäsivität und dadurch Standzeit im Scherversuch auf beschichteten Materialien auf, bei einem dennoch ausreichend hohen Tack, so dass eine solche Klebmasse z.B. für den fliegenden Rollenwechsel von beschichteten Materialien eingesetzt werden kann und auf derartigen Materialien endlich eine ausreichende Klebungszwerlässigkeit liefert.

Die erfindungsgemäß verwendete Klebmasse basiert auf Polyisobutylen als Basispolymer. Um der Klebmasse die erforderliche Anfassklebrigkeit zu verleihen, wird sie mit Harzen gemischt. Als Elastomer wird eine Mischung eines mittelmolekularen mit einem höher molekularen Polyisobutylen verwendet. Als bislang scherfesteste Ausführung hat es sich erwiesen, wie später in den Beispielen näher erläutert, als mittelmolekulare Polyisobutylenkomponente eine Type mit einem mittleren Molekulargewicht von 40.000 zu nehmen, welches unter der Typenbezeichnung "Oppanol B10" von der Firma BASF im Handel frei erhältlich ist, und als hochmolekulare Polyisobutylenkomponente eine Type mit einem mittleren Molekulargewicht von 2.600.000 zu nehmen, welches unter der Typenbezeichnung "Oppanol B150" ebenfalls frei erhältlich ist. Es wird eine ähnliche Eignung von Produkten aus der "Vistanex"-Familie der Firma Exxon vermutet. Als Harze finden Kolophonium- und/oder Polyterpen- und/oder andere Kohlenwasserstoffharze Verwendung.

Zwecks kürzerer Ausdrucksweise verwenden wir nachfolgend für die verschiedenen Polyisobutylentypen, die näher untersucht wurden, die Kürzel E1 bis E5; damit ist jeweils das Folgende gemeint:

| Kürzel: | Handelsname: |
|---|---|
| E1: Polyisobutylen mit einem mittleren Molekulargewicht von 40.000 | Oppanol B10 |
| E2: Polyisobutylen mit einem mittleren Molekulargewicht von 85.000 | Oppanol B15 |
| E3: Polyisobutylen mit einem mittleren Molekulargewicht von 200.000 | Oppanol B30 |
| E4: Polyisobutylen mit einem mittleren Molekulargewicht von 1,1 x 10⁶ | Oppanol B100 |
| E5: Polyisobutylen mit einem mittleren Molekulargewicht von 2,6 x 10⁶ | Oppanol B150 |

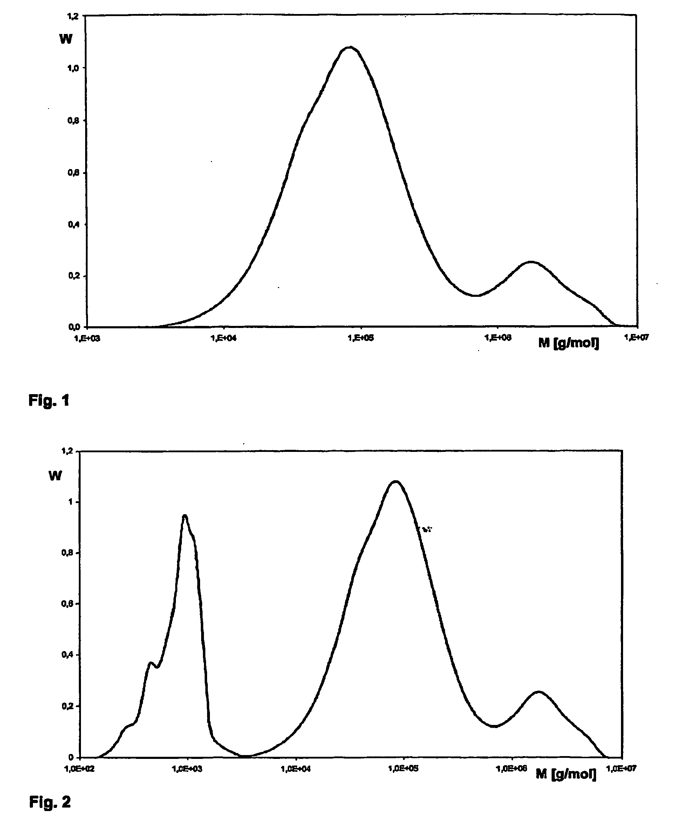

Das besonders wichtige Merkmal der Erfindung, die neuartige Molekulargewichtsverteilung innerhalb der Polyisobutylenkomponente, zeigt Figur 1 für ein inzwischen bewährtes Ausführungsbeispiel.

Unter einer "Molekulargewichtsverteilung" (genauer wäre "Molmassenverteilung") versteht man ein Diagramm, in welchem auf der senkrechten Achse die Häufigkeit W der Molmasse M in einer linearen Skalierung aufgetragen wird und auf der waagerechten Achse die jeweilige Molmasse selber in g/mol in einer üblicherweise logarithmischen Skalierung.

**Figur 1** zeigt die Molekulargewichtsverteilung einer Elastomer-Mischung ohne Harz bestehend aus 83 Gewichtsprozent von Polyisobutylen mit einem Molekulargewicht von 85.000 ("E2") und aus 17 Gewichtsprozent von Polyisobutylen mit einem Molekulargewicht von 2.600.000 ("E5"). In dieser Molekulargewichtsverteilung beträgt die Ordinate desjenigen relativen Maximums, welches zwischen den Molgewichten 1,0 x 10⁶ g/mol und 3,5 x 10⁸ g/mol liegt, 0,24, während die Ordinate des anderen relativen Maximums bei 1,07 liegt. Gemäß Anspruch 2 sollte das kleinere Maximum höchstens 25% des größeren betragen. Laut Anspruch 3 sollte das relative Minimum zwischen beiden dem Polyisobutylen zugeordneten Maxima höchstens 60% des kleineren der beiden benachbarten Maxima betragen, wie hier zu sehen.

**Figur 2** zeigt die Molekulargewichtsverteilung einer Harz enthaltenden Klebmasse, deren Elastomer-Zusammensetzung der in Fig.1 gezeigten entspricht. Diese Klebmasse enthält zu 60 Gewichtsprozent die vorgenannte Mischung zweier Polyisobutylentypen und zu 40 Gewichtsprozent Harze und zwar innerhalb der Harzkomponenten zu 25 Prozent ein Kolophoniumharz (nachfolgend auch "H5" genannt) und zu 75 Prozent ein aliphatisches Kohlenwasserstoffharz (nachfo Igend auch "H2" genannt). Die Kurve zeigt im niedrigmolekularen Bereich den Harzanteil und im mittel- und hochmolekularen Bereich die bereits in Fig. 1 gezeigten beiden relativen Maxima der beiden Polyisobutylentypen.
Die Erfindung wird nachfolgend anhand einiger Beispiele erläutert:

Gemische gemäß folgender Rezepturen zeigten die in Tabelle 1 aufgeführten Klebkräfte und Tackwerte. Dabei wurden die Klebkraft und der Tack an einse itigen Klebebändern bestimmt, bei denen die jeweilige Klebmasse mit einem Masseauftrag von 70g/m² auf einem Papierträger beschichtet worden ist. Die Klebkraft wurde auf gestrichenem Tiefdruckpapier (Sorte "Valsalux", 54,0g/m²) der Firma Norske Skog an einer Zugprüfmaschine bestimmt, unter einem Abzugswinkel von 180° und einer Abzugsgeschwindigkeit von 300 mm/min.

Der Tack wurde nach der Rolling Ball Methode bestimmt, bei der eine Stahlkugel mit einem Durchmesser von 11 mm von einer 65 mm hohen Rampe auf die Masseseite des Klebebandes rollt Die zurückgelegte Wegstrecke ist ein Maß für die Anfasskiebrigkeit, je geringer dieser Wert ist, desto höher ist der Tack.

Die nachfolgende Tabelle gibt die Zusammensetzung der Beispielrezepturen in Gewichtsprozent an:

**Tabelle 1**

| **Nr.** | **Elastomer** [%] | **Harz** [%] | **Klebkraft/Papier** [N/cm] | **Tack** [mm] |
|---|---|---|---|---|
| 1 | 50 | 20 H1, 30 H2 | 9,5 | 144 |
| 2 | 50 | 20 H3, 30 H2 | 10,6 | 170 |
| 3 | 50 | 20 H4, 30 H2 | 8,6 | > 220 |
| 4 | 50 | 20H5,30H2 | 11,0 | 105 |
| 5 | 50 | 20 H6, 30 H7 | 10,7 | 200 |
| 6 | 50 | 20 H6, 30 H8 | 9,8 | 91 |
| 7 | 50 | 20 H6, 30 H9 | 10,5 | 145 |

Bei dem eingesetzten Elastomer handelt es sich um eine Mischung, die zu 80% aus PIB (= Polyisobutylen) mit einem Molekulargewicht von 40.000 und zu 20% aus einem PIB mit einem Molekulargewicht von 1.100.000 besteht. Bei den eingesetzten Harzen handelt es sich um folgende Typen:
H1: hydriertes Kohlenwasserstoffharz mit einem Erweichungspunkt von 88°C, welches unter dem Handelsnamen "Regalite" von der Firma Eastman erhältlich ist.
H2: aliphatisches Kohlenwasserstoffharz mit einem Erweichungspunkt von 10°C, welches unter der Handelsbezeichnung Wingtack von der Firma Goodyear erhältlich ist.
H3: Kolophoniumharz, teilhydiert, Pentaerythrithester Erweichungspunkt bei 101 °C, unter dem Namen "Pentalyn" bei Firma Eastman erhältlich.
H4: Polyterpenharz (α-Pinen) Erweichungspunkt 25°C, unter dem Namen "Piccolyte" bei Firma Eastman erhältlich.
H5: Kolophoniumharz, hydiert, Pentaerythrithester
H6: Kolophoniumharz, teilhydiert, Pentaerythrithester (Erweichungspunkt 103°C)
H7: Kolophoniumharz, teilhydriert, Triethylenglykolester
H8: Kolophoniumharz, Hydroabietylalkohol
H9: Polyterpenharz, (β-Pinen).

Diese Gemische zeigen hohe Klebkräfte auf dem beschichteten Prüfuntergrund, jedoch verfügen sie - abgesehen von Probe 6 - noch über keinen überragenden Tack, vor allem nicht bei höheren Geschwindigkeiten. Trotz ihrer gegenüber dem Stand der Technik bereits besseren Eignung für ein Klebeband, welches für den fliegenden Rollenwechsel eingesetzt wird, erschienen diesbezüglich weitere Verbesserungen wünschenswert.

Nun ist es zwar an sich nicht ungewöhnlich, in solcher Lage den Zusatz eines Weichmachers zu lehren, jedoch verschlechtert sich dabei normalerweise die Kohäsion und damit die Scherstandzeit (die im Fachjargon häufig etwas unkorrekt auch als "Scherfestigkeit" bezeichnet wird) noch deutlicher als sich der Tack verbessert. Mit hochkomplizierten Weichmachertypen wurde bereits probiert, diesen Konflikt zu entspannen. In Zusammenhang mit der erfindungsgemäßen Verschiedenartigkeit der beiden Polyisobutylen-Typen haben die Erfinder aber nun herausgefunden, dass schon simples Mineralöl, zum Beispiel Weißöl, den Tack enorm verbessert. Die Erfinder erklären sich dies damit, dass das weichmachende Öl vor allem das Abgleiten der kurzkettigeren Polyisobutylen-Moleküle aufeinander fördert, die ohnehin weniger zur Kohäsivität beitragen als die langkettigeren Polyisobutylen-Moleküle. Diese fortschrittliche Konflikt-Entspannung in der Weichmacher-Auswahl und Weichmacher-Dosierung tritt nämlich nur auf, wenn die Molmassenverteilung des Polymers zwei weit auseinander liegende relative Maxima aufweist. Zwischen den mittleren Molmassen der beiden Maxima sollte vorzugsweise ein Faktor von 50 oder mehr liegen.

Zum Studium der durch die Erfindung geänderten Wirkung von Öl, nämlich der differenzierteren Einwirkung auf den Tack durch geringere Beeinflussung der Scherstandzeit, wurden Gemische gemäß folgenden Rezepturen hinsichtlich Klebkraft und Tack untersucht. Als Elastomer wurde die bereits in Tabelle 1 erwähnte Mischung von zwei verschiedenen PIB-Typen eingesetzt.

**Tabelle 2**

| **Nr.** | **Elastomer** [%] | **Harz** [%] | **Öl** [%] | **Klebkraft/Papier** [N/cm] | **Tack** [mm] |
|---|---|---|---|---|---|
| 8 | 50 | 45 (H9+H2) | 5 | 12,3 | 39 |
| 9 | 50 | 35(H9+H2) | 15 | 13,9 | 12 |
| 10 | 50 | 45 (H8+H6) | 5 | 11,9 | 42 |
| 11 | 50 | 35(H8+H6) | 15 | 14,0 | 14 |

Die folgende Tabelle 3 offenbart Mineralöl enthaltende Gemische, deren Anteil an Polyisobutylen variiert wurde. Dabei war "das Polyisobutylen" wieder - wie schon in Tabelle 1 - ein Gemisch zweier Polyisobutylentypen, nämlich eine, die zu 80% aus Polyisobutylen mit einem Molekulargewicht von 40.000 und zu 20% aus einem Polyisobutylen mit einem Molekulargewicht von 1.100.000 besteht.

Mit dem höchsten getesteten Polymer(gemisch)gehalt von 60% wurde die höchste Klebkraft bei sehr gutem Tack erreicht

**Tabelle 3 Wo immer "%" steht in dieser Anmeldung, sind Gewichtsprozent gemeint**

| **Nr.** | **Elastomer** [%] | **Harz** [%] | **Öl** [%] | **Klebkraft/Papier** [N/cm] | **Tack** [mm] | **Scherstandzeit** [min] |
|---|---|---|---|---|---|---|
| 12 | 40 | 50 | 10 | 12,6 | 15 | <2 |
| 13 | 45 | 45 | 10 | 12,6 | 15 | <2 |
| 14 | 55 | 35 | 10 | 13,7 | 17 | <2 |
| 15 | 60 | 30 | 10 | 13,8 | 16 | <2 |

Auch auf Polyethylen-beschichteten Materialien und reinem Polyethylen lagen die Klebkräfte bei den verwendeten Klebebändern sehr hoch, nämlich oberhalb von 10,0 N/cm.

Allerdings zeigt Tabelle 3 auch, dass die Scherstandzeit vorstehend genannter Rezepturen für solche Anwendungen, bei denen eine hohe Scherfesfigkeit vorteilhaft ist - wie zum Beispiel nach dem fliegenden Rollenwechsel in einer Tiefdruckmaschine, bei der Bahnspannungen von bis zu 1000 N/m auftreten - noch nicht ausreicht.

Zur statischen Messung der Scherstandzeit wurden 20 mm x 13 mm große Streifen mit einseitigem (60 g/m²) Klebmassenauftrag auf beschichtetem Tiefdruckpapier der Firma StoraEnso "Typ NeoPress rotogravure", 54g/m² LWC-Papier geprüft. Der vorbereitete Prüfling wurde mit einem Gewicht von 2 kg bei einer Geschwindigkeit von 0,03m/min 4 mal überrollt und auf Scherung belastet. Als Ergebnis wird die Zeit, die das Klebeband zum Abscheren vom Prüfuntergrund benötigt in Minuten angegeben. Die In Tabelle 4 aufgeführten Ergebnisse wurden bei einer Belastung der Proben von 5N unter Normklima (23 °C und 50 % rel. Luftfeuchte) erzielt.

Klebebänder, die mit Klebmassen derartiger Rezepturen beschichtet sind, können in der Anwendung bei höheren Zugbelastungen aufgrund ihrer geringen Kohäsion vom zu verklebenden Untergrund abscheren und so zu einem Abriss des Splices führen.

Die Erfindung soll also auch ein Klebeband mit einer Klebmasse schaffen, die genügend kohäsiv ist ohne Einbußen im Tack. Es wurden deshalb andere höher molekulare Polyisobutylene, bei denen das Molekulargewicht von M= 40.000 bis zu 2.600.000 reicht, verwendet. Die folgende Tabelle enthält die Rezepturen in Gewichtsprozent

**Tabelle 4**

| **Nummer** | **Elastomer** | **Harz** | **Öl** |
|---|---|---|---|
| 16 | 30 E1 + 30 E4 | 30 | 10 |
| 17 | 50 E1 + 10 E4 | 30 | 10 |
| 18 | 25 E1 + 35 E5 | 30 | 10 |
| 19 | 50 E1 + 20 E5 | 20 | 10 |
| 20 | 40 E2 + 20 E4 | 30 | 10 |
| 21 | 40 E2 + 15 E5 | 30 | 15 |
| 22 | 40 E2 + 20 E4 | 30 | 10 |
| 23 | 50 E2 + 10 E5 | 30 | 10 |
| 24 | 45 E3 + 15 E4 | 30 | 10 |
| 25 | 40 E3 + 20 E5 | 30 | 10 |
| 26 | 50 E3 + 10 E5 | 30 | 10 |

Diese Mischungen ergeben im Vergleich zu den Rezepturen aus Tabelle 3 sehr hohe Scherwerte ohne wesentliche Verschlechterung von Klebkraft und Tack. Die Ergebnisse zeigt Tabelle 5.

Es wurden wiederum einseitige Muster mit einem Masseauftrag von 60 g/m² gemessen, die Scherfestigkeit wurde bei Raumtemperatur auf dem oben genannten Tiefdruckpapier unter Normklima und einer Belastung von 5 N bestimmt.

**Tabelle 5**

| **Nummer** | **Klebkraft** [N/cm] | **Tack** [mm] | **Scherstandzeit** [min] |
|---|---|---|---|
| 16 | 5,4 | 28 | 13 |
| 17 | 8,5 | 35 | 3 |
| 18 | 4,5 | 49 | 213 |
| 19 | 6,5 | 39 | 65 |
| 20 | 7,5 | 25 | 18 |
| 21 | 9,7 | 8 | 16 |
| 22 | 7,2 | 18 | 87 |
| 23 | 11,2 | 18 | 19 |
| 24 | 6,9 | 36 | 40 |
| 25 | 6,8 | 16 | 139 |
| 26 | 8,2 | 14 | 71 |

Die Ergebnisse in Tabelle 5 zeigen, dass die Scherfestigkeit sehr gut über die Wahl und Dosierung der Polyisobutylentypen eingestellt werden kann, die gewünschte Klebmasse kann von nahezu gar nicht scherfest (Nummer 17) bis hin zu hoch scherfest (Nummer 18) eingestellt werden. Durch den Zusatz des Öls bleibt die für den fliegenden Rollenwechsel notwendige hohe Anfassklebrigkeit (Tack) erhalten.

Im folgenden Beispiel wurden zwei erfindungsgemäße Klebebänder mit Klebemassen, nämlich eines (1) mit Rezeptur 15 aus Tabelle 3 und eines (2) mit Rezeptur 23 aus Tabelle 4 und ein im Handel erhältliches Klebeband (3), nämlich tesa EasySplice PrintLine (und zwar die den Splice herstellende Seite, die vor der Splice-Vorbereitung noch mit Trennpapier abgedeckt ist), miteinander verglichen. Gemessen wurde die Klebkraft auf Polyethylenplatten und auf Polyethylenbeschichtetem Karton. Alle drei Klebebänder lagen als einseitig klebende Muster mit einem Masseauftrag von 50g/m² vor:

**Tabelle 6**

| | Klebkraft/PE-Platte | Klebkraft/PE-beschichteter Karton | Klebkraft/Tiefdruckpapier |
|---|---|---|---|
| Klebeband 1 | 13,1 | 12,6 | 13,8 |
| Klebeband 2 | 11,4 | 10,8 | 11,2 |
| Klebeband 3 | 1,8 | 1,6 | 3,7 |

Ausgehend von einer Klebmasse enthaltend zumindest Polyisobutylen und zumindest ein klebrigmachendes Harz schlägt die Erfindung zusammenfassend vor, ein Klebeband mit einer hochtackigen Klebmasse, bevorzugt mit besonderer Eignung zur Verwendung auf Splice-Klebebändern, die mit Flüssigklebern - insbesondere auch auf beschichteten Materialien- zu konkurrieren vermögen, dadurch zu schaffen, dass
c) die Molekulargewichtsverteilung des in der Klebmasse enthaltenen Polyisobutylens zwei relative Maxima aufweist,
d) und zwar eines zwischen 50.000 und 200.000 und
e) ein zweites zwischen 1,0 x 10⁶ und 3,5 x 10⁶.

Vorzugsweise liegt zwischen beiden genannten Maxima ein Minimum von höchstens 60% der Höhe des kleineren der beiden benachbarten Maxima und in der Molekulargewichtsverteilung beträgt die Ordinate desjenigen relativen Maximums, welches zwischen 1,0 x 10⁶ und 3,5 x 10⁶ liegt, höchstens 25% der Ordinate desjenigen relativen Maximums, welches zwischen 50.000 und 200.000 liegt.

## Patentansprüche

1. Klebeband mit einer Klebemasse enthaltend zumindest
a) Polyisobutylen und
b) zumindest ein klebrigmachendes Harz,
wobei
c) die Molekulargewichtsverteilung- also die diagrammartige Darstellung der Häufigkeit über dem Molekulargewicht - des Polyisobutylens zwei relative Maxima aufweist,
d) und zwar eines zwischen 50.000 und 200.000 und
e) ein zweites zwischen 1,0 x 10⁶ und 3,5 x 10⁶, *[Anspruch 9 i.V.m. Anspruch 1]*
**dadurch gekennzeichnet, dass** es
f) nur einseitig mit der Klebmasse beschichtet ist,
g) und wobei das Klebeband auf der der Klebmasse abgewandten Seite ein spaltbares System aufweist.

2. Klebeband nach Anspruch 1,
**dadurch gekennzeichnet, dass**
In der Molekulargewichtsverteilung die Ordinate desjenigen relativen Maximums, weiches zwischen 1,0 x 10⁶ und 3,5 x 10⁶ liegt, höchstens 25% der Ordinate desjenigen relativen Maximums beträgt, welches zwischen 50.000 und 200.000 liegt.

3. Klebeband nach Anspruch 1 oder 2,
**dadurch gekennzeichnet, dass**
das in der Klebemasse enthaltene Polyisobutylen in seiner Molekulargewichtsverteilung zwischen seinen beiden relativen Maxima ein relatives Minimum aufweist, dessen Höhe (also die Häufigkeit) höchstens 60% des kleineren der beiden benachbarten Maxima beträgt.

4. Klebeband nach zumindest einem der Ansprüche 1 bis 3,
**dadurch gekennzeichnet, dass**
zwischen den Abszissen (also Molekulargewichten) der beiden relativen Maxima in der Molekulargewichtsverteilung, die den verschiedenen mittleren Molekulargewichten der beiden Polyisobutylentypen zuzuordnen sind, ein Faktor von 50 oder mehr liegt.

5. Klebeband nach zumindest einem der Ansprüche 1 bis 4.
**dadurch gekennzeichnet, dass**
die Klebemasse
a) 40 Gewichtsprozent bis 70 Gewichtsprozent Polyisobutylen
b) 25 bis 40 Gewichtsprozent eines klebrigmachenden Harzes und
c) 5 Gewichtsprozent bis 20 Gewichtsprozent Mineralöl enthält.

6. Klebeband nach Anspruch 5,
**dadurch gekennzeichnet, dass**
das verwendete Mineralöl ein medizinisches Weißöl gemäß Deutschem Arzneimittelbuch ist.

7. Verwendung eines Klebebandes gemäß einem der vorhergehenden Ansprüche,
**dadurch gekennzeichnet , dass**
es als rollenverschlussbeinhaltendes Spliceband für den fliegenden Splice zum Aneinanderfügen des Endes einer zur Neige gehenden alten Rolle mit dem Anfang einer als Ersatz einzuführenden neuen Rolle benutzt wird.

## Claims

1. Adhesive tape having an adhesive comprising at least
a) polyisobutylene and
b) at least one tackifying resin,
where
c) the molecular weight distribution - that is, the plot of frequency over the molecular weight - of the polyisobutylene features two relative maxima, specifically
d) one between 50,000 and 200,000 and
e) a second between 1.0 x 10⁶ and 3.5 x 10⁶, **characterized in that** it is
f) coated with the adhesive on one side only,
g) and the adhesive tape having a cleavable system on the side remote from the adhesive.

2. Adhesive tape according to Claim 1, **characterized in that** in the molecular weight distribution the ordinate of the relative maximum which lies between 1.0 x 10⁶ and 3.5 x 10⁶ amounts to not more than 25% of the ordinate of the relative maximum which lies between 50,000 and 200,000.

3. Adhesive tape according to Claim 1 or 2, **characterized in that** the polyisobutylene present in the adhesive features in its molecular weight distribution, between its two relative maxima, a relative minimum whose height (i.e. its frequency) amounts to not more than 60% of the smaller of the two adjacent maxima.

4. Adhesive tape according to at least one of Claims 1 to 3, **characterized in that** between the abscissae (i.e. molecular weights) of the two relative maxima in the molecular weight distribution which can be assigned to the different average molecular weights of the two polyisobutylene grades there is a factor of 50 or more.

5. Adhesive tape according to at least one of Claims 1 to 4, **characterized in that** the adhesive contains
a) from 40 to 70 per cent by weight of polyisobutylene,
b) from 25 to 40 per cent by weight of a tackifying resin and
c) from 5 to 20 per cent by weight of mineral oil.

6. Adhesive tape according to Claim 5, **characterized in that** the mineral oil used is a medical white oil in accordance with the German Pharmacopoeia.

7. Use of an adhesive tape according to any of the preceding claims, **characterized**
**in that** it is utilized as reel-closure-including splicing tape for flying splice for joining the end of an old, outgoing reel to the start of a new reel to be introduced to replace it.

## Revendications

1. Bande adhésive présentant une masse adhésive contenant au moins
a) du polyisobutylène et
b) au moins une résine qui rend adhésif,
où
c) la répartition des poids moléculaires - c'est-à-dire la représentation en diagramme de la fréquence par rapport au poids moléculaire - du polyisobutylène présente deux maxima relatifs,
d) c'est-à-dire un entre 50 000 et 200 000 et
e) un deuxième entre 1,0 x 10⁶ et 3,5 x 10⁶, [revendication 9 en association avec la revendication 1] **caractérisée**
f) **en ce qu'**elle n'est revêtue que d'un côté avec la masse adhésive,
g) et **en ce que** la bande adhésive présente, sur le côté dos à la masse adhésive un système dissociable.

2. Bande adhésive selon la revendication 1,
**caractérisée en ce que** dans la répartition de poids moléculaires, l'ordonnée du maximum relatif qui se situe entre 1,0 x 10⁶ et 3,5 x 10⁶ g/mole, représente au plus 25% de l'ordonnée de l'autre maximum relatif, qui se situe entre 50 000 et 200 000.

3. Bande adhésive selon la revendication 1 ou 2, **caractérisée en ce que** le polyisobutylène contenu dans la masse adhésive présente, dans sa répartition des poids moléculaires, entre ses deux maxima relatifs, un minimum relatif, dont la hauteur (c'est-à-dire la fréquence) représente au plus 60% du plus petit des deux maxima adjacents.

4. Bande adhésive selon au moins l'une quelconque des revendications 1 à 3, **caractérisée en ce qu'**un facteur de 50 ou plus sépare les abscisses (c'est-à-dire les poids moléculaires) des deux maxima relatifs dans la répartition des poids moléculaires, qui sont associés aux différents poids moléculaires moyens de deux types de polyisobutylène.

5. Bande adhésive selon au moins l'une quelconque des revendications 1 à 4, **caractérisée en ce que** la masse adhésive
a) contient 40% en poids à 70% en poids de polyisobutylène
b) 25 à 40% en poids d'une résine qui rend adhésif et
c) 5% en poids à 20% en poids d'huile minérale.

6. Bande adhésive selon la revendication 5,
**caractérisée en ce que** l'huile minérale utilisée est une huile blanche médicale selon la pharmacopée allemande.

7. Utilisation d'une bande adhésive selon l'une quelconque des revendications précédentes, **caractérisée en ce qu'**elle est utilisée comme bande de raccordement contenant la fermeture des rouleaux pour le raccordement volant en vue de l'assemblage de l'extrémité d'un ancien rouleau touchant à la fin avec le début d'un nouveau rouleau à introduire comme rouleau de remplacement.
